# EUROPÄISCHE PATENTSCHRIFT

(11) **EP 4 046 864 B1**
(45) Veröffentlichungstag und Bekanntmachung des Hinweises auf die Patenterteilung: **01.10.2025**
(21) Anmeldenummer: 22157864.4
(22) Anmeldetag: 22.02.2022
(51) Int. Cl.: B60N 2/42, B60N 2/60, B60N 2/68

(54) **FAHRZEUGSITZ MIT EINEM CRASHMODIFIZIERTEN BLENDENHALTER MIT EINEM HAUPTRAHMEN UND EINEM ZUSATZRAHMEN**
VEHICLE SEAT WITH A CRASH-MODIFIED SHIELD HOLDER WITH A MAIN FRAME AND AN AUXILIARY FRAME
SIÈGE DE VÉHICULE DOTÉ D'UN PORTE-CACHE MODIFIÉ EN CAS DE COLLISION DOTÉ D'UN CADRE PRINCIPAL ET D'UN CADRE SUPPLÉMENTAIRE

(30) Priorität: 23.02.2021 DE 102021201696
(43) Veröffentlichungstag der Anmeldung: 24.08.2022
(73) Patentinhaber: VOLKSWAGEN AG, 38440 Wolfsburg (DE)
(72) Erfinder: Reps, Marcel, 39340 Haldensleben (DE); Maciej, Steffen, 39114 Magdeburg (DE)

(56) Entgegenhaltungen:
- DE-A1- 102014 219 978
- DE-A1- 102019 120 025
- JP-A- 2019 010 903

## Beschreibung

Die Erfindung betrifft einen Blendenhalter für einen Fahrzeugsitz sowie einen Fahrzeugsitz mit einem solchen Blendenhalter.

Aus dem Stand der Technik ist es bekannt, Abdeckungen oder Blenden vorzusehen, die mittels Befestigungselementen an einer Struktur oder an einem Sitzversteller befestigt werden.

Solche Befestigungselemente werden auch als Blendenhalter oder Sitzblendenhalter bezeichnet. Diese Blendenhalter sind meist kompliziert geformte Drahtrahmen, die einerseits mit der Sitzstruktur eines Fahrzeugsitzes und andererseits mit der Blende verbunden sind.

Als Stand der Technik wird auf die Druckschriften JP 2019-01903 A, DE 696 00 668 T2, FR 2 837 158 A1, DE 10 2004 043 433 A1, WO 2019 207 221 A1, DE 10 2015 205 231 A1, DE 10 2014 012 011 A1, DE 10 2019 120 025 A1 und DE 10 2014 219 978 A1 hingewiesen.

Die Blenden werden in dem Bereich, an dem beispielsweise ein Sicherheitsgurt an der Blende vorbeiläuft, insbesondere im Crashfall an die Blende gezogen wird, mit hohen Kräften beaufschlagt. Diese Crashkräfte gefährden, insbesondere im Bereich des an den Blenden anliegenden Sicherheitsgurtes, insbesondere des Beckengurtabschnitt des Sicherheitsgurtes, die Strukturstabilität der Blenden. Die Blenden weisen somit im Wirkbereich der auf die Blenden einwirkenden Kräfte einen kritischen Bereich auf, der im Crashfall, insbesondere im Frontalcrashfall, besonders hohen Belastungen unterliegt. Diese erläuterte Problematik wird beispielsweise gemäß der Druckschrift DE 10 2014 219 978 A1 durch einen Blendenhalter aus mindestens einem Draht gelöst, der mindestens ein Element zur Befestigung des Blendenhalters an einer an den Blendenhalter angrenzenden festen Struktur und mindestens ein Element zur Befestigung des Blendenhalters an einer Blende aufweist, wobei der Draht einen Stützbügel ausbildet, der im Zusammenbauzustand von Blendenhalter und Blende in einem kritischen Bereich der Blende angeordnet ist, in dem in einem etwaigen Crashfall eine hohe Crashkraft auf die Blende einwirkt.

Die Sitzblendenhalter sind meist kompliziert geformte Draht-/Kunststoffrahmen, die einerseits mit der Sitzstruktur eines Fahrzeugsitzes und andererseits mit der Blende verbunden sind, wobei sie sich nur zum Teil auf der Struktur abstützen, wobei der Drahtrahmen in nachteiliger Weise nicht unbedingt alle gefährdeten Bereiche der Blende hinsichtlich eines auftretenden Krafteintrags, insbesondere im Crashfall, abstützt. Zudem ergeben sich beispielsweise Bereiche der Blende, die prominent in seitlicher Richtung zur Karosserie hin gegenüber anderen Bereichen der Blende hervortreten, um innerhalb der dadurch gebildeten Bauräume fahrzeugsitzseitige Komponenten unterzubringen. Treffen diese prominenten Bereiche mit anderen Komponenten zum Beispiel mit einem von außen auf die Blende wirkenden Beckengurt eines Gurtsystems zusammen, ergibt sich ein Bereich der Blende, der insbesondere im Crashfall besonders geschützt werden muss. Darüber hinaus liegen aktuell neue gesetzliche Sicherheitsanforderungen des Euro-NCAP für einen Fahrzeugsitz vor, der eine Erhöhung des Zugweges der Gurtstraffer von 100 mm auf 160 mm als Kriterium festlegt. Dadurch erhöhen sich Zugkräfte der Gurte des Gurtsystems, insbesondere auch des Beckengurtes, sodass sich die auf eine Blende im Crashfall wirkenden Kräfte gegenüber herkömmlichen Gurtsystemen erhöhen.

Der Erfindung liegt die Aufgabe zugrunde, eine Blende mit einem Blendenhalter für einen Fahrzeugsitz zu schaffen, die durch den Blendenhalter hinsichtlich ihrer Strukturstabilität, insbesondere in einem kritischen Bereich optimiert ist.

Die Aufgabe wird erfindungsgemäß durch einen Blendenhalter mit den Merkmalen des Anspruchs 1 gelöst.

Ausgangspunkt der Erfindung ist ein Blendenhalter für einen Fahrzeugsitz, der einen Hauptrahmen und einen Zusatzrahmen umfasst, die aus geformten Drähten ausgebildet sind, wobei ausschließlich der Hauptrahmen mindestens ein Struktur-Befestigungselement aufweist, wobei der Zusatzrahmen über eine Art Knotenverbindung mit dem Hauptrahmen in Verbindung steht.

Erfindungsgemäß ist vorgesehen, dass der Zusatzrahmen eine obere Schwinge und eine untere Schwinge mit mindestens einem stirnseitigen Ende aufweist, wobei die Schwingen zur Bildung des Zusatzrahmens über Verbindungen miteinander verbunden sind.

Bevorzugt ist vorgesehen, dass der Hauptrahmen und der Zusatzrahmen mittels der Knotenverbindung miteinander verschweißt sind.

Vorgesehen ist weiter, dass der Blendenhalter des Fahrzeugsitzes in einem Zusammenbauzustand in eine Blende als Verkleidungsteil integriert ist, wobei der Blendenhalter sitzstrukturfest mit einer Struktur des Fahrzeugsitzes und die Blende mit dem Blendenhalter verbunden ist, wobei der Zusatzrahmen im Zusammenbauzustand von Blendenhalter und Blende in einem kritischen Bereich der Blende angeordnet ist, in dem in einem etwaigen Crashfall eine hohe Crashkraft auf die Blende einwirkt.

Die Erfindung betrifft auch einen Fahrzeugsitz mit einer als Verkleidungsteil mittels eines Blendenhalters sitzstrukturfest an einer Struktur des Fahrzeugsitzes angeordneten Blende, wobei der Blendenhalter einen Hauptrahmen und einen Zusatzrahmenumfasst, die aus geformten Drähten ausgebildet sind, wobei der Zusatzrahmen im Zusammenbauzustand von Blendenhalter und Blende in einem kritischen Bereich der Blende angeordnet ist, in dem in einem etwaigen Crashfall eine hohe Crashkraft auf die Blende einwirkt.

Es ist vorgesehen, dass ausschließlich der Hauptrahmen mindestens ein Struktur-Befestigungselement aufweist, mittels dem der Hauptrahmen im Zusammenbauzustand von Blendenhalter und Blende direkt an einer Struktur des Fahrzeugsitzes angeordnet ist, wobei der Zusatzrahmen indirekt an der Struktur des Fahrzeugsitzes befestigt ist, da der Zusatzrahmen über eine Art Knotenverbindung mit dem Hauptrahmen in Verbindung steht, wobei die Knotenverbindung zwischen Hauptrahmen und Zusatzrahmen eine elastische schwingende Bewegung des Zusatzrahmens parallel zur Struktur des Fahrzeugsitzes zulässt, da sich der Zusatzrahmen an der Struktur des Fahrzeugsitzes abstützt, wobei der Zusatzrahmen eine obere Schwinge und eine untere Schwinge umfasst, die zur Bildung des Zusatzrahmens über Verbindungen miteinander verbunden sind, und wobei sich mindestens ein stirnseitiges Ende der oberen Schwinge und/oder der unteren Schwinge an der Struktur des Fahrzeugsitzes punktuell abstützt/abstützen.

Der Blendenhalter umfasst den Hauptrahmen und den Zusatzrahmen. Beide Rahmen sind bevorzugt aus dreidimensional geformten und im Wesentlichen an die Innenkontur der Blende angepassten Drähten ausgebildet, wobei der Zusatzrahmen im Zusammenbauzustand von Blendenhalter und Blende in einem kritischen Bereich der Blende angeordnet ist, in dem in einem etwaigen Crashfall eine hohe Crashkraft auf die Blende einwirkt.

Der kritische Bereich der Blende wird durch ein nahe der Blende angeordnetes Gurtsystem des Fahrzeugsitzes, insbesondere einem Beckengurt und/oder eine Gurtbandverbindung aus Gurtschloss und Gurtzunge des Gurtsystems gebildet, das insbesondere im Crashfall mit einer hohen Crashkraft auf die Blende beziehungsweise den Blendenhalter unterhalb der Blende einwirkt.

Wie erläutert, weist ausschließlich der Hauptrahmen das mindestens eine Struktur-Befestigungselement auf, mittels dem der Hauptrahmen im Zusammenbauzustand von Blendenhalter und Blende direkt an der Struktur des Fahrzeugsitzes angeordnet ist, während der Zusatzrahmen indirekt an der Struktur des Fahrzeugsitzes befestigt ist, da der Zusatzrahmen über die Knotenverbindung mit dem Hauptrahmen in Verbindung steht.

Die Verbindung zwischen Hauptrahmen und Zusatzrahmen lässt in vorteilhafter Weise die elastische schwingende Bewegung des Zusatzrahmens parallel zur Struktur des Fahrzeugsitzes zu.

Der Zusatzrahmen umfasst die obere Schwinge und die untere Schwinge. Die Schwingen sind zur Bildung des Zusatzrahmens über die oben genannten Verbindungen miteinander verbunden. Dabei ist die obere Schwinge gegenüber der unteren Schwinge elastisch schwingend durch Materialverformung beweglich angeordnet und ausgebildet.

Es ist bevorzugt vorgesehen, dass die obere Schwinge gegenüber der unteren Schwinge durch die elastische schwingende Bewegung im Wesentlichen orthogonal zu der vertikalen Ebene (x/z-Ebene) der Struktur des Fahrzeugsitzes in vorteilhafter Weise die Aufnahme einer auf die Blende und die obere Schwinge wirkenden Kraft unter Verformung der Blende und der oberen Schwinge im kritischen Bereich zulässt, worin ein wesentlicher Aspekt der Erfindung gesehen wird.

Ein weiterer wesentlicher Aspekt besteht bevorzugt darin, dass die obere Schwinge auf der Innenseite der Blende im kritischen Bereich der Blende in einem spezifischen Bereich des kritischen Bereichs angeordnet ist, der durch eine prominent hervorstehende Kante der Blende definiert ist, wobei sich die Kante der Blende auf der oberen Schwinge abstützt, welche die Aufnahme der auf die Blende und die obere Schwinge wirkenden Kraft unter Verformung der Blende und der oberen Schwinge im spezifischen kritischen Bereich zulässt.

Ferner ist als weiterer wesentlicher Aspekt bevorzugt vorgesehen, dass die untere Schwinge auf der Innenseite der Blende im kritischen Bereich der Blende in einem spezifischen Bereich des kritischen Bereichs angeordnet ist, der durch die Blendenwand in der vertikalen Ebene (x/z-Ebene) der Blende unterhalb der prominent hervorstehenden Kante der Blende definiert ist, wobei sich die Blendenwand der Blende an der unteren Schwinge abstützt, welche die Aufnahme der auf die Blendewand wirkenden Kraft unter Verformung der Blendenwand und der unteren Schwinge im kritischen Bereich zulässt.

Der Hauptrahmen und der Zusatzrahmen sind mittels der Knotenverbindung miteinander verbunden, insbesondere verschweißt.

Weitere Details sind im Zusammenhang mit den Figuren in der Beschreibung erläutert.

Für die Zwecke der Beschreibung soll eine horizontale Richtung der Blende oder der Struktur des Fahrzeugsitzes mit "x" bezeichnet werden. Mit "y" wird die Richtung in der Horizontalen orthogonal zur x-Richtung bezeichnet, und mit "z" wird die Richtung in der Vertikalen des Fundamentkörpers orthogonal zur x-Richtung bezeichnet. Die x-Richtung und die y-Richtung spannen eine horizontale x/y-Ebene auf. Die x-Richtung und die z-Richtung spannen eine vertikale x/z-Ebene auf. Die y-Richtung und die z-Richtung spannen ebenfalls eine vertikale y/z-Ebene auf, welche die x/z-Ebene orthogonal schneidet.

Innerhalb der Figuren werden nachfolgend die gleichen Bezugszeichen für gleiche Bauteile verwendet, wobei gegebenenfalls nicht bei jeder Figur alle bereits vorgestellten Bauteile anhand der Bezugszeichen erneut beschrieben werden.

Die Erfindung wird nachfolgend in Ausführungsbeispielen anhand der zugehörigen Zeichnungen erläutert. Es zeigen:
- Figur 1: eine perspektivische Ansicht eines Ausschnittes eines Fahrzeugsitzes schräg von vorn mit einer Blende und einem Gurtsystem, dessen Beckengurt in einem Crashfall in einem kritischen Bereich eine Crashkraft auf die Blende ausübt;
- Figur 2: einen erfindungsgemäßen Blendenhalter in einer perspektivischen Ansicht schräg von hinten mit einem Haupt(draht)rahmen und einem Zusatz(draht)rahmen;
- Figur 3: den erfindungsgemäßen Blendenhalter gemäß Figur 2, jedoch in einer Seitenansicht und ohne Verstellhebel;
- Figur 4: eine vergrößerte perspektivische Darstellung schräg von hinten auf den Zusatz(draht)rahmen.

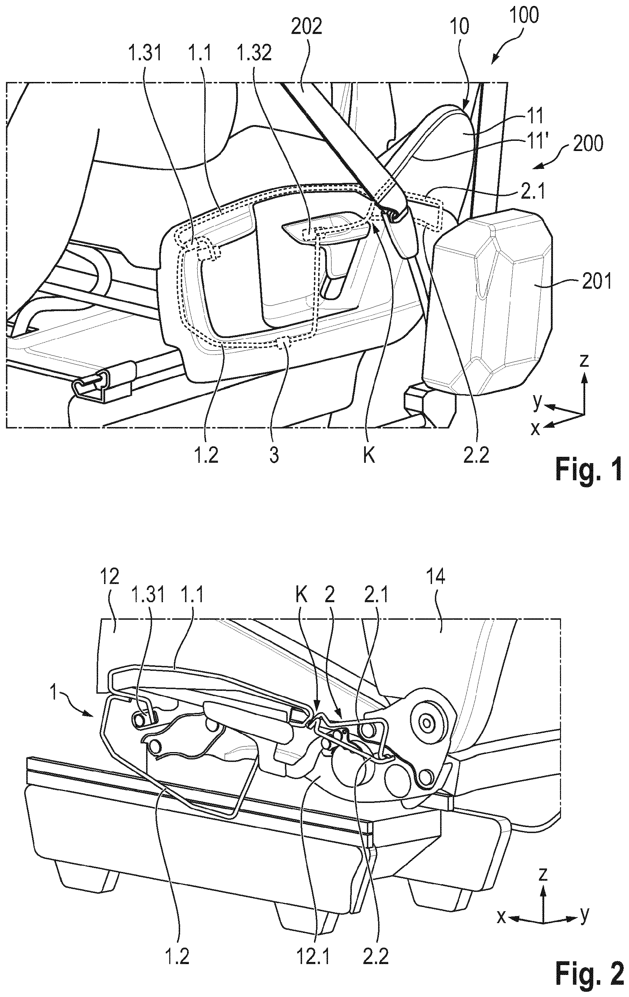

Figur 1 zeigt in einer perspektivischen Ansicht einen Ausschnitt eines Fahrzeugsitzes 100 schräg von vorn mit einer Blende 10 und einem dem Fahrzeugsitz 100 zugeordneten Gurtsystem 200.

Der Ausschnitt der Figur 1 zeigt den Fahrzeugsitz 100 mit der Rückenlehne 14 und einem Sitzteil 12 sowie Blende B. Die Blende 10 ist in Längsrichtung der Blende 10 gesehen, in x-Richtung (Fahrtrichtung) verlaufend, seitlich an einer in Figur 1 nicht sichtbaren angrenzenden Struktur 12.1 (vergleiche vorab Figur 2) des Sitzteiles 12 angeordnet.

Gezeigt ist somit eine an dem Sitzteil 12 angeordnete (in Vorwärts-Fahrtrichtung in einem Fahrzeug gesehen) linke Blende 10 im Einbauzustand, die sich mit einem Blendenhalter 1, 2 im Zusammenbauzustand befindet. Der Blendenhalter 1, 2 ist im Zusammenbauzustand in die Blende 10 integriert, wobei der Blendenhalter 1, 2 mit der Struktur 12.1 und die Blende 10 mit dem Blendenhalter 1, 2 verbunden ist.

In Figur 1 wird verdeutlicht, dass die Blende 10 in einem kritischen Bereich, in dem der Beckengurtbereich eines Beckengurtes 202 des Gurtsystems 200 gegebenenfalls im Crashfall an der Blende 10 anliegt, wodurch die Blende 10 hohen Belastungen standhalten muss, da sie gegebenenfalls einem hohen Krafteintrag unterliegt. Das zu dem Gurtsystem 200 gehörende Gurtaufnahmemodul 201 ist dargestellt, das im Ausführungsbeispiel im unteren Bereich der B-Säule karosseriefest angeordnet ist.

Die insbesondere im Frontalcrashfall auf die Blende 10 einwirkende Kraft wirkt dabei im Ausführungsbeispiel auf einen prominent in seitlicher y-Richtung zur Karosserie hin gegenüber anderen Bereichen der Blende hervortretenden Blendenbereich 11, der dadurch angeordnet ist, dass die Blende 10 in diesem Bereich zwischen der Struktur 12.1 des Sitzteiles 12 und der Innenseite der Blende 10 über einen Bauraum verfügt, in dem fahrzeugsitzseitige Komponenten angeordnet sind. Durch diese Ausgestaltung ist die Materialstruktur der Blende 10 gegenüber einem äußeren Krafteintrag noch anfälliger für eventuelle Materialverformungen und/oder sogar Materialzerstörungen.

Die Blende 10 weist im Ausführungsbeispiel weiter eine in y-Richtung ausgebildete Vertiefung auf, in die in x-Richtung ein Höhenverstellhebel (ohne Bezugszeichen) des Fahrzeugsitzes 100 aus einer in die Blende 10 integrierten schlitzartigen Öffnung heraussteht. Die Öffnung 18 weist entsprechend in x-Richtung. Innerhalb der Blende 10 liegt im Ausführungsbeispiel eine Mechanik des Höhenverstellhebels, für die in der Blende 10 ein entsprechender Bauraum vorgehalten ist.

In Figur 1 ist der in die Blende 10 integrierte Blendenhalter 1, 2, da er hinter der Struktur der Blende 10 liegt, zur Orientierung der Position beziehungsweise Positionierung des Blendenhalters 1, 2 (die noch detailliert erläutert wird) in Strichlinien dargestellt.

Im kritischen Bereich weist die Blende 10 einen im Wesentlichen in einer vertikalen x/y-Ebene liegenden ebenen Anlagebereich auf, der mit der ebenen Innenfläche des Gurtschlosses des Beckengurtes 202 ein Kontaktflächenpaar bildet. Die Gurtzunge des Beckengurtes 202 steckt im Gebrauch im Gurtschloss und der Beckengurt ist über das Becken der aufsitzenden Person geführt, wobei die Kombination Gurtschloss/Gurtzunge und Beckengurt über eine Kante 11' der Blende 1, 2, die zwischen der vertikalen x/z-Ebene der Blende 1, 2 und einer horizontalen x/y-Ebene der Blende 10 ausgebildet ist, geführt ist. Diese Kante 11' und die angrenzenden Strukturen beziehungsweise Blendenbereiche 11 der Blende 1, 2 bilden die am stärksten hinsichtlich der Materialintegrität disponierten und zu schützenden Bereiche aus, die im Crashfall durch Einwirkung der Kombination Gurtschloss/Gurtzunge und/oder Beckengurt der Materialverformung und/oder sogar Materialzerstörung unterliegen könnten.

Die nachfolgend detailliert erläuterte erfindungsgemäße Lösung vermeidet diese Materialverformung und/oder Materialzerstörung auch bei einem hohen Krafteintrag auf die Blende 10 im erläuterten kritischen Bereich. Es wird dafür gesorgt, dass die dreidimensionale Struktur der Blende 10 dem Krafteintrag im Crashfall gewachsen ist. Jegliche mit einer Zerstörung einhergehende Deformation der Blende 10 oder eine etwaige Rissbildung der Blende 10 oder dergleichen wird zuverlässig vermieden.

Die dazu notwendigen Maßnahmen werden erfindungsgemäß durch einen Blendenhalter 1, 2 realisiert, der auf der im Zusammenbauzustand nicht sichtbaren Innenseite der Blende 10 an der Blende 10 und im Einbauzustand an der Struktur 12.1 des Sitzteiles 12 des Fahrzeugsitzes 100 angeordnet ist.

Der Blendenhalter 10 ist aus einem dreidimensional geformten Haupt(draht)rahmen und einem dreidimensionalen geformten Zusatz(draht)rahmen aus einem steifen Draht ausgebildet. Die Rahmen werden nachfolgend kurz als Hauptrahmen 1 und Zusatzrahmen 2 bezeichnet.

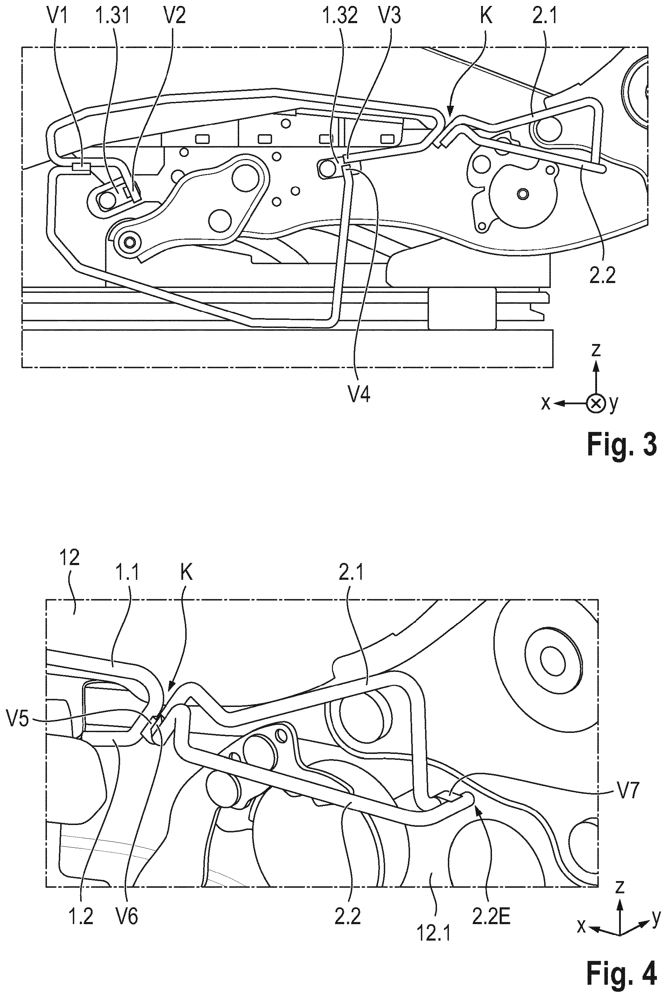

Bei der nachfolgenden Beschreibung des Hauptrahmens 1 wird gebeten, die Figuren 1 bis 3 in einer Zusammenschau zu betrachten.

Bei der nachfolgenden Beschreibung des Zusatzrahmens 2 wird gebeten, die Figuren 1 bis 4 in einer Zusammenschau zu betrachten.

### Der Hauptrahmen 1:

Der Hauptrahmen 1 weist einen oberen Stützbügel 1.1 und einen unteren Stützbügel 1.2 auf.

Die Endabschnitte des oberen Stützbügels 1.1 laufen jeweils wie u-förmige Bügel geformt aus.

Der Hauptabschnitt des oberen Stützbügels 1.1 ist zwischen den Endabschnitten ausgebildet.

Hauptabschnitt und die Endabschnitte des oberen Stützbügels 1.1 stützen den oberen vorderen Bereich der Blende 10 gegen Kräfte aus seitlicher y-Richtung von außen und aus vertikaler z-Richtung von oben ab.

Die Enden der als u-förmige Bügel ausgebildeten Endabschnitte sind auf je ein Struktur-Befestigungselement 1.31 und 1.32 geführt und mit diesen in Verbindungen V2, V4 fest verbunden, insbesondere verschweißt.

Die Struktur-Befestigungselemente 1.31, 1.32 in der Art von Befestigungsplatten sind mit der Struktur 12.1 des Sitzteiles 12 verbunden, insbesondere verschraubt.

Der untere Stützbügel 1.2 weist auf der einen Seite einen ebenfalls als u-förmigen Bügel ausgebildeten Endabschnitt auf, der sich gegenüber den horizontal (in x-Richtung) verlaufenden Endabschnitten des oberen Stützbügels 1.1 eher vertikal (in z-Richtung) erstreckt.

Dieser Endabschnitt ist mit seinem Ende schließlich parallel an dem Endabschnitt des einen u-förmigen Bügels beziehungsweise an dessen Endabschnitt herangeführt, das heißt umgebogen, und das eine Ende des unteren Stützbügel 1.2 ist mit diesem Endabschnitt in der Verbindung V1 fest verbunden, insbesondere verschweißt.

Der untere Stützbügel 1.2 weist auf der anderen Seite einen eher als L-förmigen Bügel ausgebildeten Endabschnitt auf, der sich gegenüber dem horizontal (in x-Richtung) verlaufenden Endabschnitt des oberen Stützbügels 1.1 vertikal (in z-Richtung) erstreckt.

Zwischen den Endabschnitten des unteren Stützbügels 1.2 ist der Hauptabschnitt des unteren Stützbügels 1.2 ausgebildet, der sich im Wesentlichen horizontal (in x-Richtung) erstreckt.

Ein Endabschnitt zwischen dem Hauptabschnitt des unteren Stützbügels 1.2 ist mit seinem einen Ende an den u-förmigen Bügel des unteren Stützbügels 1.2 herangeführt und dort mit dem Endabschnitt des unteren Stützbügels 1.2 in der Verbindung V1 verbunden, insbesondere verschweißt.

Das andere Ende des unteren Stützbügels 1.2 ist in einer Verbindung V3 mit dem Struktur-Befestigungselement 1.32 fest verbunden, insbesondere verschweißt.

Der Hauptabschnitt und die Endabschnitte des unteren Stützbügels 1.2 stützen den vorderen, oberen Bereich und den vorderen, unteren Bereich der Blende 10 gegen einwirkende Kräfte aus horizontaler Längsrichtung (x-Richtung) von vorn und aus vertikaler z-Richtung von oben und unten ab und insgesamt gegen Kräfte, die aus seitlicher Richtung (y-Richtung) auf die Blende 10 wirken, ab.

An dem Struktur-Befestigungselement 1.32 sind somit die jeweiligen Enden des oberen Stützbügels 1.1 und des unteren Stützbügels 1.2 durch die Verbindungen V3, V4 fest angeordnet.

Die anderen Enden des oberen Stützbügels 1.1 und des unteren Stützbügels 1.2 sind, wie erläutert, zunächst bei der Verbindung V1 miteinander verbunden und anschließend ist nur das eine Ende des unteren Stützbügels 1.2 zu der Verbindung V2 geführt und dort fest mit dem Struktur-Befestigungselement 1.31 verbunden.

Die Blende weist noch zusätzlich ein Verbindungselement 3, insbesondere einen Filmscharnier-Clip, auf, der auf der Innenseite der Blende 10 angeordnet ist. Das Verbindungselement 3 ist mit dem Hauptabschnitt des unteren Stützbügels 1.2 verbunden, insbesondere eingerastet/eingeclipst, wie in Figur 1 schematisch verdeutlicht wird.

Der Hauptrahmen 1 ist somit lagefest angeordnet und stützt im Zusammenbauzustand von Blendenhalter 1, 2 und Blende 10 alle vorderen Bereiche der Blende 10 an der Struktur 12.1 des Sitzteiles 12 in alle Raumrichtungen x, y, z ab.

Die Knotenverbindung K zwischen Hauptrahmen 1 und Zusatzrahmen 2: Erfindungsgemäß wird der derart lagefest angeordnete Hauptrahmen 1 als Haltestruktur für den Zusatzrahmen 2 verwendet, indem der Zusatzrahmen 2 mit dem oberen Stützbügel 1.1, insbesondere mit dem hinteren Endabschnitt des oberen Stützbügels 1.1, verbunden ist.

Es wird die Knotenverbindung K geschaffen, wobei in einem Knoten eine Verbindung V5 zwischen dem hinteren Endabschnitt des oberen Stützbügels 1.1 und einem Ende des Endabschnittes einer oberen Schwinge 2.1 und/oder einer unteren Schwinge 2.2 des Zusatzrahmens 2 ausgebildet ist.

### Der Zusatzrahmen 2:

Der Zusatzrahmen 2 umfasst die obere Schwinge 2.1 und eine untere Schwinge 2.2.

Das Ende des Endabschnittes der unteren Schwinge 2.2 des Zusatzrahmens 2 ist in einer Verbindung V6 mit dem Ende des Endabschnittes der oberen Schwinge 2.1 verbunden.

Das Ende des Endabschnittes der oberen Schwinge 2.1 ist in einer Verbindung V5 mit dem hinteren Endabschnitt des oberen Stützbügels 1.1 verbunden.

Die Verbindungen sind im Ausführungsbeispiel in bevorzugter Ausgestaltung als Schweißverbindungen ausgebildet.

Es versteht sich, dass die Enden der Endabschnitte der Schwingen 2.1 und 2.2 auch derart verbunden sein können, dass das Ende der unteren Schwinge 2.2 mit dem Ende des oberen Stützbügels 1.1 verbunden ist und das Ende der oberen Schwinge 2.1 mit dem Ende der unteren Schwinge 2.2.

Die Bezeichnung der beiden Komponenten 2.1 und 2.2 des Zusatzrahmens 2 als Schwingen soll verdeutlichen, dass der Zusatzrahmen 2 sozusagen an seiner Basis, dem Knoten K, elastisch schwingend, das heißt leicht nachgiebig angebracht ist, wie noch verdeutlicht wird.

Die Schwingen 2.1, 2.2 sind in ihrem Verlauf nicht mit der Struktur 12.1 des Sitzteiles 12 verbunden.

Die Schwingen 2.1, 2.2 werden von den Enden im Knotenpunkt der Knotenverbindung K ausgehend über je einen Bogen in den hinteren Blendenbereich 11 der Blende 10 geführt, wobei die obere Schwinge 2.1 im Wesentlichen leicht nach hinten ansteigend der leicht nach hinten ansteigenden Kontur der Blende 10 folgt.

Mit anderen Worten, ein Hauptabschnitt der oberen Schwinge 2.1 verläuft an der Innenseite der Blende 10 entlang der Kante 11', die zwischen der vertikalen x/z-Ebene der Blende 1, 2 und der horizontalen x/y-Ebene der Blende 10 im Wesentlichen orthogonal ausgebildet ist.

Ein Hauptabschnitt der unteren Schwinge 2.2 verläuft an der Innenseite der Blende 10 entlang der vertikalen x/z-Ebene der Blende 1, 2 unterhalb der oberen Schwinge 2.1, im Wesentlichen horizontal beziehungsweise leicht schräg nach hinten unten. Mit anderen Worten, der Hauptabschnitt der unteren Schwinge 2.2 stützt die in der vertikalen x/z-Ebene liegende Seitenwand der Blende 10 im hinteren Blendenbereich 11 der Blende 10 von innen ab, während die obere Schwinge 2.1 die Kante 11' und damit den oberen horizontalen Bereich (in der x/y-Ebene) des hinteren Blendenbereichs 11 der Blende 10 abstützt.

Der dem Knoten in der Knotenverbindung K gegenüberliegende Endabschnitt der oberen Schwinge 2.1 ist wiederum als L-förmiger Bügel ausgebildet und läuft von dem Hauptabschnitt der oberen Schwinge 2.1 ausgehend L-förmig in vertikaler Richtung (z-Richtung) aus. Das Ende des Endabschnittes der oberen Schwinge 2.1 ist schließlich nach innen zur Struktur 12.1 des Sitzteiles 12 hin umgebogen.

Der dem Knoten in der Knotenverbindung K gegenüberliegende Endabschnitt der oberen Schwinge 2.1 ist ebenfalls als L-förmiger Bügel ausgebildet und läuft von dem Hauptabschnitt der unteren Schwinge 2.2 ausgehend L-förmig in horizontaler Richtung (y-Richtung) nach innen zur Struktur 12.1 des Sitzteiles 12 hin aus.

Die Enden der Endabschnitte der oberen und unteren Schwinge 2.1 und 2.2 liegen somit in y-Richtung gesehen parallel nebeneinander und sind im Ausführungsbeispiel in einer Verbindung V7 fest miteinander verbunden, insbesondere verschweißt.

Das stirnseitige Ende 2.2E der unteren Schwinge 2.2 liegt mit seiner Stirnseite an der Struktur 12.1 des Sitzteiles 12 an, bildet dort aber erfindungsgemäß keine feste Verbindung, sondern stützt sich in y-Richtung an der Struktur 12.1 des Sitzteiles 12 ab.

### Erfindungsgemäße Effekte:

Durch die detaillierte Erläuterung wird deutlich, dass der Zusatzrahmen 2 folgende erfindungsgemäße Effekte bewirkt, die nachfolgend noch erläutert werden.

Wirkt eine Kraft beispielsweise von dem Beckengurt oder der Gurtschloss/Gurtzungenverbindung von oben aus z-Richtung über die Blende 10 auf den direkt dahinter liegenden, sich mit der Blende 10 in Kontakt befindenden, angeordneten Zusatzrahmen 2, weicht der Zusatzrahmen 2 als ein Effekt insgesamt nach unten aus, da er durch die im Knoten im Knotenverbindung K hebelartig frei aufgehängten Schwingen 2.1, 2.2 beweglich angeordnet ist. Der Zusatzrahmen 2 kann nach unten geringfügig ausweichen, wodurch Kräfte, die auf die Blende 10 wirken, in Verformungsenergie zur Verformung der Drähte des Zusatzrahmens 2 umgewandelt und abgebaut werden. Die Blende 10 selbst wird dadurch vor Materialverformungen und/oder sogar Materialzerstörungen geschützt.

Das stirnseitige Ende 2.2E der unteren Schwinge 2.2 liegt dabei an der Struktur 12.1 des Sitzteiles 12 an und bewegt sich halbkreisförmig durch die erfindungsgemäße "Einpunkt-Aufhängung" des Zusatzrahmens 2 im Knotenpunt der Knotenverbindung K als Drehachse gegenüber der Struktur 12.1 nach unten. Die untere Schwinge 2.2 kann diese Bewegung auf der Innenseite mitmachen, da die Kräfte von der oberen Schwinge 2.1 über die Verbindungen V6, V7 auf die untere Schwinge 2.2 übertragen werden und für die Bewegung der unteren Schwinge 2.2 entsprechend Bewegungsfreiraum innerhalb der Blende 10 vorhanden ist.

Wirkt eine Kraft beispielsweise von dem Beckengurt oder der Gurtschloss/Gurtzungenverbindung seitlich aus y-Richtung über die Blende 10 auf den direkt dahinter in Kontakt mit der Blende 10 angeordneten Zusatzrahmen 2 auf die untere Schwinge 2.2, ist als weiterer Effekt eine Stützung der Blenden 10 in diesem Blendenbereich 11 gewährleistet, da sich die untere Schwinge 2.2 mit ihrem stirnseitigen Ende 2.2E an der Struktur 12.1 des Sitzteiles 12 abstützt.

Der Hauptabschnitt der unteren Schwinge 2.2 kann die Kräfte, die über die Blende 10 auf den Hauptabschnitt der unteren Schwinge 2.2 wirken, durch Verformung des Drahtes des Hauptabschnittes der unteren Schwinge 2.2 in Verformungsenergie umwandeln, sodass die Kräfte abgebaut werden. Die Blende 10 selbst wird dadurch vor Materialverformungen und/oder sogar Materialzerstörung geschützt.

Bei hohen Kräften bewegt sich auch der frei im Raum hinter der Blende 10 angeordnete Knoten in Richtung Struktur 12.1 des Sitzteiles 12 und federt sozusagen Kräfte, im Bereich der Anbindung des Zusatzrahmens 2 an dem Hauptrahmen 1 durch Krafteinleitung in den Hauptrahmen 1, ab.

Wirkt beispielsweise eine Kraft von dem Beckengurt oder der Gurtschloss/Gurtzungenverbindung schräg von oben auf die Kante 11' der Blende 10, treten sozusagen die zuvor beschriebenen Effekte in Kombination auf, da in diesem Fall die resultierende Hauptkraft auf die Kante 11' der Blende 10 aus den Kraftvektoren besteht, die aus z-Richtung und y-Richtung auf die Kante 11' wirken.

Darüber hinaus kommt jedoch noch zusätzlich der Effekt, der durch die Anordnung des Hauptabschnittes der oberen Schwinge 2.1 genau auf der Rückseite der Kante 11' der Blende 10 bewirkt wird.

Der Hauptabschnitt der oberen Schwinge 2.1 ist zwischen seinem knotenseitigen Ende und dem strukturseiteigenen Ende frei beweglich in Richtung der Struktur 12.1 des Sitzteiles 12 - wie eine elastische Schwinge - auslenkbar.

Wirkt die resultierende Hauptkraft des Beckengurtes oder der Gurtschloss/Gurtzungenverbindung, insbesondere im prominenten Bereich der Blende 10, auf die Kante 11' der Blende 10, so wird die Kraft im Wesentlichen über die Blende 10 auf den Hauptabschnitt der oberen Schwinge 2.1 übertragen, die sich auf dem Hauptabschnitt abstützt.

Der Draht der oberen Schwinge 2.1 wird gemeinsam mit der Blende 10 in vorteilhafter Weise zur Aufnahme von Kräften zerstörungsfrei verformt, wobei insbesondere die obere Schwinge 2.1 durch ihre Verformungsarbeit so viel Energie aufnimmt, dass die erwarteten Kräfte aufgenommen werden können.

Kurz zusammengefasst, der Blendenhalter 10 ist derart ausgebildet, dass er alle auf die Blende 10 aus den verschiedenen Raumrichtungen x, y, z in den verschiedenen Bereichen der Blende 10 wirkenden Kräfte, insbesondere auch die Gurtkräfte im hinteren Blendenbereich 11 der Blende 10, optimal aufnehmen kann. Die Stabilität der Blende 10 wird stets sichergestellt und eine Materialzerstörung der Blende 10 wird sicher vermieden. Insbesondere der Zusatzrahmen 2 ist geometrisch derart geformt, dass er sich einerseits an die Innenkontur der Blende 10 anpasst und anderseits durch Verformungsenergie Kräfte, die aus unterschiedlichen Richtungen wirken, aufnehmen kann, indem die Schwingen 2.1 und 2.2 und die dafür vorgesehenen Raumrichtungen beweglich und verformbar ausgebildet beziehungsweise spezifisch innerhalb der Blende 10 angeordnet sind.

### Bezugszeichenliste

- 100: Fahrzeugsitz
- 200: Gurtsystem
- 201: Gurtaufnahmemodul
- 202: Beckengurt
- 10: Blende
- 11: hinterer Blendenbereich
- 11': Kante
- 12: Sitzteil
- 12.1: Struktur
- 14: Rückenlehne
- 1, 2: Blendenhalter
- 1: Hauptrahmen
- 1.1: oberer Stützbügel
- 1.2: unterer Stützbügel
- 1.31: Struktur-Befestigungselement
- 1.32: Struktur-Befestigungselement
- 2: Zusatzrahmen
- 2.1: obere Schwinge
- 2.2: untere Schwinge
- 2.2E: stirnseitiges Ende
- 3: Verbindungselement
- K: Knotenverbindung
- V1: Verbindung
- V2: Verbindung
- V3: Verbindung
- V4: Verbindung
- V5: Verbindung
- V6: Verbindung
- V7: Verbindung

## Patentansprüche

1. Blendenhalter (1, 2) für einen Fahrzeugsitz (100), der einen Hauptrahmen (1) und einen Zusatzrahmen (2) umfasst, die aus geformten Drähten ausgebildet sind, wobei ausschließlich der Hauptrahmen (1) mindestens ein Struktur-Befestigungselement (1.31, 1.32) aufweist, wobei der Zusatzrahmen (2) über eine Art Knotenverbindung (K) mit dem Hauptrahmen (1) in Verbindung (V5) steht, **dadurch gekennzeichnet, dass** der Zusatzrahmen (2) eine obere Schwinge (2.1) und eine untere Schwinge (2.2) mit mindestens einem stirnseitigen Ende (2.2E) aufweist, wobei die Schwingen (2.1, 2.2) zur Bildung des Zusatzrahmens (2) über Verbindungen (V6, V7) miteinander verbunden sind.

2. Blendenhalter (1, 2) nach Anspruch 1, **dadurch gekennzeichnet, dass** der Blendenhalter (1, 2) des Fahrzeugsitzes (100) in einem Zusammenbauzustand in eine Blende (10) als Verkleidungsteil integriert ist, wobei der Blendenhalter (1, 2) sitzstrukturfest mit einer Struktur (12.1) des Fahrzeugsitzes (100) und die Blende 10 mit dem Blendenhalter (1, 2) verbunden ist, wobei der Zusatzrahmen (2) im Zusammenbauzustand von Blendenhalter (1, 2) und Blende (10) in einem kritischen Bereich der Blende (10) angeordnet ist, in dem in einem etwaigen Crashfall eine hohe Crashkraft auf die Blende (10) einwirkt, wobei der Hauptrahmen (1) im Zusammenbauzustand von Blendenhalter (1, 2) und Blende (10) direkt an der Struktur (12.1) des Fahrzeugsitzes (100) angeordnet ist, wobei der Zusatzrahmen (2) indirekt an der Struktur (12.1) des Fahrzeugsitzes (100) befestigt ist, da der Zusatzrahmen (2) über die Knotenverbindung (K) mit dem Hauptrahmen (1) in Verbindung (V5) steht, wobei die Knotenverbindung (K) zwischen Hauptrahmen (1) und Zusatzrahmen (2) eine elastische schwingende Bewegung des Zusatzrahmens (2) parallel zur Struktur (12.1) des Fahrzeugsitzes (100) zulässt, da sich der Zusatzrahmen (2) an der Struktur (12.1) des Fahrzeugsitzes (100) abstützt, wobei sich mindestens ein stirnseitiges Ende (2.2E) der oberen Schwinge (2.1) und/oder der unteren Schwinge (2.2) an der Struktur (12.1) des Fahrzeugsitzes (100) punktuell abstützt/abstützen.

3. Blendenhalter (1, 2) nach Anspruch 2,**dadurch gekennzeichnet, dass** der kritische Bereich der Blende (10) durch ein nahe der Blende (10) angeordnetes Gurtsystem (200) des Fahrzeugsitzes (100), das aus einem Beckengurt und/oder einer Gurtbandverbindung aus Gurtschloss und Gurtzunge des Gurtsystems (200) ausgebildet ist und im Crashfall mit einer hohen Crashkraft auf die Blende (10) einwirkt.

4. Blendenhalter (1, 2) nach Anspruch 2, **dadurch gekennzeichnet, dass** die obere Schwinge (2.1) gegenüber der unteren Schwinge (2.2) elastisch schwingend beweglich angeordnet und ausgebildet ist, wobei die obere Schwinge (2.1) gegenüber der unteren Schwinge (2.2) durch die elastische schwingende Bewegung im Wesentlichen orthogonal zu der vertikalen Ebene (x/z-Ebene) der Struktur (12.1) des Fahrzeugsitzes (100) die Aufnahme einer im kritischen Bereich auf die Blende (10) und die obere Schwinge (2.1) wirkenden Kraft unter Verformung der Blende (10) und der oberen Schwinge (2.1) zulässt.

5. Blendenhalter (1, 2) nach Anspruch 4, **dadurch gekennzeichnet, dass** die obere Schwinge (2.1) auf einer Innenseite der Blende (10) im kritischen Bereich der Blende (10) angeordnet ist, der durch eine prominent hervorstehende Kante (11') der Blende (10) definiert ist, wobei sich die Kante (11') der Blende (10) auf der oberen Schwinge (2.1) abstützt, welche die Aufnahme der auf die Blende (10) und die obere Schwinge (2.1) wirkenden Kraft im kritischen Bereich unter Verformung der Blende (10) und der oberen Schwinge (2.1) zulässt.

6. Blendenhalter (1, 2) nach Anspruch 4, **dadurch gekennzeichnet, dass** die untere Schwinge (2.1) auf der Innenseite der Blende (10) im kritischen Bereich der Blende (10) angeordnet ist, der durch die Blendenwand in der vertikalen Ebene (x/z-Ebene) der Blende (10) unterhalb der prominent hervorstehenden Kante (11') der Blende (10) definiert ist, wobei sich die Blendenwand der Blende (10) an der unteren Schwinge (2.2) abstützt, welche die Aufnahme der im kritischen Bereich auf die Blendewand wirkenden Kraft unter Verformung der Blendenwand und der unteren Schwinge (2.1) zulässt.

7. Blendenhalter (1, 2) nach Anspruch 2, **dadurch gekennzeichnet, dass** der Hauptrahmen (1) einen oberen Stützbügel (1.1) und einen unteren Stützbügel (1.2) umfasst, die zur Bildung des Hauptrahmens (1) über Verbindungen (V1, V3, V4) miteinander verbunden sind.

8. Blendenhalter (1, 2) nach den Ansprüchen 1 und 7, **dadurch gekennzeichnet, dass** an dem einen Struktur-Befestigungselement (1.32) die jeweiligen Enden des oberen Stützbügels (1.1) und des unteren Stützbügels (1.2) durch die Verbindungen (V3, V4) fest angeordnet sind, wobei die anderen Enden des oberen Stützbügels (1.1) und des unteren Stützbügels (1.2) zunächst bei der Verbindung (V1) miteinander verbunden sind, wobei anschließend nur das eine Ende des unteren Stützbügels (1.2) zu der Verbindung (V2) geführt und dort fest mit dem anderen Struktur-Befestigungselement (1.31) verbunden ist.

9. Fahrzeugsitz (100) mit einer als Verkleidungsteil mittels eines Blendenhalters (1, 2) sitzstrukturfest an einer Struktur (12.1) des Fahrzeugsitzes (100) angeordneten Blende (10), wobei der Blendenhalter (1, 2) einen Hauptrahmen (1) und einen Zusatzrahmen (2) umfasst, die aus geformten Drähten ausgebildet sind, wobei der Zusatzrahmen (2) im Zusammenbauzustand von Blendenhalter (1, 2) und Blende (10) in einem kritischen Bereich der Blende (10) angeordnet ist, in dem in einem etwaigen Crashfall eine hohe Crashkraft auf die Blende (10) einwirkt, wobei ausschließlich der Hauptrahmen (1) mindestens ein Struktur-Befestigungselement (1.31, 1.32) aufweist, mittels dem der Hauptrahmen (1) im Zusammenbauzustand von Blendenhalter (1, 2) und Blende (10) direkt an einer Struktur (12.1) des Fahrzeugsitzes (100) angeordnet ist, wobei der Zusatzrahmen (2) indirekt an der Struktur (12.1) des Fahrzeugsitzes (100) befestigt ist, da der Zusatzrahmen (2) über eine Art Knotenverbindung (K) mit dem Hauptrahmen (1) in Verbindung (V5) steht, wobei die Verbindung (K) zwischen Hauptrahmen (1) und Zusatzrahmen (2) eine elastische schwingende Bewegung des Zusatzrahmens (2) parallel zur Struktur (12.1) des Fahrzeugsitzes (100) zulässt, da sich der Zusatzrahmen (2) an der Struktur (12.1) des Fahrzeugsitzes (100) abstützt, **dadurch gekennzeichnet, dass** der Zusatzrahmen (2) eine obere Schwinge (2.1) und eine untere Schwinge (2.2) umfasst, die zur Bildung des Zusatzrahmens (2) über Verbindungen (V6, V7) miteinander verbunden sind, und sich mindestens ein stirnseitiges Ende (2.2E) der oberen Schwinge (2.1) und/oder der unteren Schwinge (2.2) an der Struktur (12.1) des Fahrzeugsitzes (100) punktuell abstützt/abstützen.

## Claims

1. Panel holder (1, 2) for a vehicle seat (100), comprising a main frame (1) and an auxiliary frame (2), each formed from shaped wires, wherein only the main frame (1) comprises at least one structural fastening element (1.31, 1.32), wherein the auxiliary frame (2) is connected (V5) to the main frame (1) via a type of joint connection (K), **characterized in that** the auxiliary frame (2) comprises an upper rocker (2.1) and a lower rocker (2.2) having at least one front end (2.2E), wherein the rockers (2.1, 2.2) are connected to one another via connections (V6, V7) in order to form the auxiliary frame (2).

2. Panel holder (1, 2) according to claim 1, **characterized in that,** in an assembled state, the panel holder (1, 2) of the vehicle seat (100) is integrated into a panel (10) as a trim part, wherein the panel holder (1, 2) is connected to a structure (12.1) of the vehicle seat (100) in a seat-structure-fixed manner, and the panel 10 is connected to the panel holder (1, 2), wherein, in the assembled state of the panel holder (1, 2) and panel (10), the auxiliary frame (2) is arranged in a critical region of the panel (10) in which, in a possible crash event, a high crash force acts on the panel (10), wherein, in the assembled state of the panel holder (1, 2) and panel (10), the main frame (1) is arranged directly on the structure (12.1) of the vehicle seat (100), wherein the auxiliary frame (2) is indirectly fastened to the structure (12.1) of the vehicle seat (100), since the auxiliary frame (2) is connected (V5) to the main frame (1) via the joint connection (K), wherein the joint connection (K) between the main frame (1) and the auxiliary frame (2) allows a resilient, oscillating movement of the auxiliary frame (2) parallel to the structure (12.1) of the vehicle seat (100), since the auxiliary frame (2) is supported on the structure (12.1) of the vehicle seat (100), wherein at least one front end (2.2E) of the upper rocker (2.1) and/or the lower rocker (2.2) is/are supported at points on the structure (12.1) of the vehicle seat (100).

3. Panel holder (1, 2) according to claim 2, **characterized in that** the critical region of the panel (10) by a belt system (200) of the vehicle seat (100) arranged close to the panel (10), which system is formed by a lap belt and/or a belt strap connection consisting of a belt buckle and belt tongue of the belt system (200) and acts on the panel (10) with a high crash force in the event of a crash.

4. Panel holder (1, 2) according to claim 2, **characterized in that** the upper rocker (2.1) is arranged and designed to be resiliently and oscillatingly movable relative to the lower rocker (2.2), wherein the upper rocker (2.1), relative to the lower rocker (2.2) and by means of the resilient oscillating movement substantially orthogonal to the vertical plane (x/z plane) of the structure (12.1) of the vehicle seat (100), allows the absorption of a force acting on the panel (10) and the upper rocker (2.1) in the critical region via deformation of the panel (10) and the upper rocker (2.1).

5. Panel holder (1, 2) according to claim 4, **characterized in that** the upper rocker (2.1) is arranged on an inner side of the panel (10) in the critical region of the panel (10), which is defined by a prominently projecting edge (11') of the panel (10), wherein the edge (11') of the panel (10) is supported on the upper rocker (2.1), which allows the absorption of the force acting on the panel (10) and the upper rocker (2.1) in the critical region via deformation of the panel (10) and the upper rocker (2.1).

6. Panel holder (1, 2) according to claim 4, **characterized in that** the lower rocker (2.1) is arranged on the inner side of the panel (10) in the critical region of the panel (10), which is defined by the panel wall in the vertical plane (x/z plane) of the panel (10) below the prominently projecting edge (11') of the panel (10), wherein the panel wall of the panel (10) is supported on the lower rocker (2.2), which allows the absorption of the force acting on the panel wall in the critical region via deformation of the panel wall and the lower rocker (2.1).

7. Panel holder (1, 2) according to claim 2, **characterized in that** the main frame (1) comprises an upper support bracket (1.1) and a lower support bracket (1.2) which are connected to one another via connections (V1, V3, V4) in order to form the main frame (1).

8. Panel holder (1, 2) according to claims 1 and 7, **characterized in that,** on the one structural fastening element (1.32), the respective ends of the upper support bracket (1.1) and the lower support bracket (1.2) are fixedly arranged by means of the connections (V3, V4), wherein the other ends of the upper support bracket (1.1) and the lower support bracket (1.2) are initially connected to one another at the connection (V1), wherein, subsequently, only the one end of the lower support bracket (1.2) is guided to the connection (V2) and is fixedly connected to the other structural fastening element (1.31) there.

9. Vehicle seat (100) comprising a panel (10) arranged as a trim part on a structure (12.1) of the vehicle seat (100) in a seat-structure-fixed manner by means of a panel holder (1, 2), wherein the panel holder (1, 2) comprises a main frame (1) and an auxiliary frame (2) each formed from shaped wires, wherein, in the assembled state of the panel holder (1, 2) and panel (10), the auxiliary frame (2) is arranged in a critical region of the panel (10) in which, in the event of a crash, a high crash force acts on the panel (10), wherein only the main frame (1) comprises at least one structural fastening element (1.31, 1.32) by means of which, in the assembled state of the panel holder (1, 2) and panel (10), the main frame (1) is arranged directly on a structure (12.1) of the vehicle seat (100), wherein the auxiliary frame (2) is indirectly fastened to the structure (12.1) of the vehicle seat (100), since the auxiliary frame (2) is connected (V5) to the main frame (1) via a type of joint connection (K), wherein the connection (K) between the main frame (1) and the auxiliary frame (2) allows a resilient oscillating movement of the auxiliary frame (2) parallel to the structure (12.1) of the vehicle seat (100), since the auxiliary frame (2) is supported on the structure (12.1) of the vehicle seat (100), **characterized in that** the auxiliary frame (2) comprises an upper rocker (2.1) and a lower rocker (2.2) which are connected to one another via connections (V6, V7) to form the auxiliary frame (2), and at least one front end (2.2E) of the upper rocker (2.1) and/or the lower rocker (2.2) is/are supported at points on the structure (12.1) of the vehicle seat (100).

## Revendications

1. Support de cache (1, 2) pour un siège de véhicule (100), qui comprend un cadre principal (1) et un cadre auxiliaire (2), qui sont formés de fils façonnés, dans lequel seul le cadre principal (1) présente au moins un élément de fixation de structure (1.31, 1.32), dans lequel le cadre auxiliaire (2) est en liaison (V5) avec le cadre principal (1) par l'intermédiaire d'une sorte de liaison nodale (K), **caractérisé en ce que** le cadre auxiliaire (2) présente un bras oscillant supérieur (2.1) et un bras oscillant inférieur (2.2) comportant au moins une extrémité frontale (2.2E), dans lequel les bras oscillants (2.1, 2.2) sont reliés entre eux par l'intermédiaire de liaisons (V6, V7) pour former le cadre auxiliaire (2).

2. Support de cache (1, 2) selon la revendication 1, **caractérisé en ce que** le support de cache (1, 2) du siège de véhicule (100) est intégré, dans un état d'assemblage, dans un cache (10) en tant que pièce d'habillage, dans lequel le support de cache (1, 2) est solidaire de la structure de siège avec une structure (12.1) du siège de véhicule (100) et le cache (10) est relié au support de cache (1, 2), dans lequel le cadre auxiliaire (2) est agencé, dans l'état d'assemblage du support de cache (1, 2) et du cache (10), dans une zone critique du cache (10) dans laquelle une force de collision élevée agit sur le cache (10) dans un éventuel cas de collision, dans lequel le cadre principal (1) est agencé, dans l'état d'assemblage du support de cache (1, 2) et du cache (10), directement sur la structure (12.1) du siège de véhicule (100), dans lequel le cadre auxiliaire (2) est fixé indirectement à la structure (12.1) du siège de véhicule (100), étant donné que le cadre auxiliaire (2) est en liaison (V5) avec le cadre principal (1) par l'intermédiaire de la liaison nodale (K), dans lequel la liaison nodale (K) entre le cadre principal (1) et le cadre auxiliaire (2) permet un déplacement oscillant élastique du cadre auxiliaire (2) parallèlement à la structure (12.1) du siège (100) du véhicule, étant donné que le cadre auxiliaire (2) s'appuie sur la structure (12.1) du siège de véhicule (100), dans lequel au moins une extrémité frontale (2.2E) du bras oscillant supérieur (2.1) et/ou du bras oscillant inférieur (2.2) s'appuie/s'appuient ponctuellement sur la structure (12.1) du siège de véhicule (100).

3. Support de cache (1, 2) selon la revendication 2, **caractérisé en ce que** la zone critique du cache (10) est formée par un système de ceinture (200) du siège de véhicule (100) agencé à proximité du cache (10), qui est formé d'une ceinture abdominale et/ou d'une liaison de sangle de ceinture constituée d'une boucle de ceinture et d'une languette de ceinture du système de ceinture (200) et qui agit sur le cache (10) avec une force de collision élevée en cas de collision.

4. Support de cache (1, 2) selon la revendication 2, **caractérisé en ce que** le bras oscillant supérieur (2.1) est agencé et formé de manière à pouvoir se déplacer de manière oscillante élastiquement par rapport au bras oscillant inférieur (2.2), dans lequel le bras oscillant supérieur (2.1), par rapport au bras oscillant inférieur (2.2), permet, par le déplacement oscillant élastique sensiblement orthogonal au plan vertical (plan x/z) de la structure (12.1) du siège de véhicule (100), d'absorber une force agissant dans la zone critique sur le cache (10) et le bras oscillant supérieur (2.1) en déformant le cache (10) et le bras oscillant supérieur (2.1).

5. Support de cache (1, 2) selon la revendication 4, **caractérisé en ce que** le bras oscillant supérieur (2.1) est agencé sur un côté intérieur du cache (10) dans la zone critique du cache (10), qui est définie par un bord saillant proéminent (11') du cache (10), dans lequel le bord (11') du cache (10) s'appuie sur le bras oscillant supérieur (2.1), qui permet d'absorber la force agissant sur le cache (10) et le bras oscillant supérieur (2.1) dans la zone critique en déformant le cache (10) et le bras oscillant supérieur (2.1).

6. Support de cache (1, 2) selon la revendication 4, **caractérisé en ce que** le bras oscillant inférieur (2.1) est agencé sur le côté intérieur du cache (10) dans la zone critique du cache (10), qui est définie par la paroi de cache dans le plan vertical (plan x/z) du cache (10) au-dessous du bord saillant proéminent (11') du cache (10), dans lequel la paroi de cache (10) s'appuie sur le bras oscillant inférieur (2.2), qui permet d'absorber la force agissant sur la paroi de cache dans la zone critique en déformant la paroi de cache et le bras oscillant inférieur (2.1).

7. Support de cache (1, 2) selon la revendication 2, **caractérisé en ce que** le cadre principal (1) comprend une barre d'appui supérieure (1.1) et une barre d'appui inférieure (1.2), qui sont reliées entre elles par l'intermédiaire de liaisons (V1, V3, V4) pour former le cadre principal (1).

8. Support de cache (1, 2) selon les revendications 1 et 7,
**caractérisé en ce que** sur l'un des éléments de fixation de structure (1.32), les extrémités respectives de la barre d'appui supérieure (1.1) et de la barre d'appui inférieure (1.2) sont agencées de manière fixe par les liaisons (V3, V4), dans lequel les autres extrémités de la barre d'appui supérieure (1.1) et de la barre d'appui inférieure (1.2) sont d'abord reliées entre elles par la liaison (V1), dans lequel seule l'extrémité de la barre d'appui inférieure (1.2) est ensuite amenée à la liaison (V2) et y est reliée de manière fixe à l'autre élément de fixation de structure (1.31).

9. Siège de véhicule (100) comportant un cache (10) agencé en tant que pièce d'habillage solidaire de la structure de siège au moyen d'un support de cache (1, 2) sur une structure (12.1) du siège de véhicule (100), dans lequel le support de cache (1, 2) comprend un cadre principal (1) et un cadre auxiliaire (2) qui sont formés de fils façonnés, dans lequel le cadre auxiliaire (2) est agencé dans l'état d'assemblage du support de cache (1, 2) et du cache (10) dans une zone critique du cache (10), dans laquelle une force de collision élevée agit sur le cache (10) dans un éventuel cas de collision, dans lequel seul le cadre principal (1) présente au moins un élément de fixation de structure (1.31, 1.32), au moyen duquel le cadre principal (1) est agencé directement sur une structure (12.1) du siège de véhicule (100) dans l'état d'assemblage du support de cache (1, 2) et du cache (10), dans lequel le cadre auxiliaire (2) est fixé indirectement sur la structure (12.1) du siège de véhicule (100), étant donné que le cadre auxiliaire (2) est en liaison (V5) avec le cadre principal (1) par l'intermédiaire d'une sorte de liaison nodale (K), dans lequel la liaison (K) entre le cadre principal (1) et le cadre auxiliaire (2) permet un déplacement oscillant élastique du cadre auxiliaire (2) parallèlement à la structure (12.1) du siège de véhicule (100), étant donné que le cadre auxiliaire (2) s'appuie sur la structure (12.1) du siège de véhicule (100), **caractérisé en ce que** le cadre auxiliaire (2) comprend un bras oscillant supérieur (2.1) et un bras oscillant inférieur (2.2) qui sont reliés l'un à l'autre par l'intermédiaire de liaisons (V6, V7) pour former le cadre auxiliaire (2), et au moins une extrémité frontale (2.2E) du bras oscillant supérieur (2.1) et/ou du bras oscillant inférieur (2.2) s'appuie/s'appuient ponctuellement sur la structure (12.1) du siège de véhicule (100).
